# EUROPÄISCHE PATENTSCHRIFT

(11) **EP 3 609 748 B1**
(45) Veröffentlichungstag und Bekanntmachung des Hinweises auf die Patenterteilung: **22.03.2023**
(21) Anmeldenummer: 18716233.4
(22) Anmeldetag: 05.04.2018
(51) Int. Cl.: B60S 1/48, B60S 1/50, B60S 1/56

(54) **AUTONOMES REINIGUNGSSYSTEM FÜR EIN KRAFTFAHRZEUG**
AUTONOMOUS CLEANING SYSTEM FOR A MOTOR VEHICLE
SYSTÈME DE NETTOYAGE AUTONOME POUR UN VÉHICULE À MOTEUR

(30) Priorität: 13.04.2017 DE 102017206469
(43) Veröffentlichungstag der Anmeldung: 19.02.2020
(73) Patentinhaber: Continental Automotive Technologies GmbH, 30165 Hannover (DE)
(72) Erfinder: WERNER, Thomas, 36214 Nentershausen (DE); SCHLEIN, Rolf-Dieter, 36199 Rotenburg a. d. Fulda (DE); HAHN, Torsten, 34576 Homberg (DE); KALTHOFF, Heiko, 96476 Bad Rodach (DE); WAGNER, Tim, 64289 Darmstadt (DE)
(74) Vertreter: Continental Corporation
(86) Internationale Anmeldenummer: PCT/EP2018/058696
(87) Internationale Veröffentlichungsnummer: WO 2018/189019

(56) Entgegenhaltungen:
- DE-A1- 10 155 113
- DE-A1-102005 058 513
- DE-A1-102009 012 010
- DE-A1-102016 006 039
- US-A- 5 946 763
- US-A1- 2003 041 900
- US-A1- 2014 217 194
- US-A1- 2016 167 625

## Beschreibung

Die Erfindung betrifft ein autonomes Reinigungssystem für ein Fahrzeug, zum Reinigen von transparenten Elementen unterschiedlichen Verwendungszwecks wie Windschutzscheiben, Scheinwerferstreuscheiben und insbesondere von optischen Komponenten der optischen oder optoelektronischen Erfassungsvorrichtungen wie Kameras, LiDARs und vergleichbaren optischen Sensoren, sowie ein mit dem Reinigungssystem ausgestattetes Fahrzeug.

Die meisten Reinigungsvorrichtungen auf dem Markt sind für die Reinigung von Windschutz- und Rückscheiben ausgelegt, wobei einige weitere Komponenten zusätzlich einfach mitgereinigt werden können. Ebenso sind spezialisierte Reinigungsvorrichtungen bekannt welche speziell zur Reinigung einzelner Komponenten, wie beispielsweise Streuscheibenreinigungsanlagen angepasst sind.

Eine wichtige Entwicklungsrichtung bei modernen Kraftfahrzeigen ist das autonome, computergesteuerte Fahren. Eine Voraussetzung dafür sind vielfältige Assistenzsysteme, welche den Fahrzeugnutzer beim Fahren des Fahrzeuges unterstützen und diverse Funktionen übernehmen. Hierfür ist es erforderlich, die Umgebung des Fahrzeugs automatisiert und jederzeit zuverlässig zu erfassen und zu überwachen. Einige Assistenzsysteme beziehen die Informationen über die Fahrzeugumgebung aus optischen oder optoelektronischen Erfassungsvorrichtungen wie beispielsweise Kameras, laserbasierten Abstandssensoren (LiDARs) oder Infrarotsensoren. Derartige Vorrichtungen verfügen über transparente Elemente wie Objektivlinsen oder Abdeckungen, welche das Licht je nach Anwendungsfall uneingeschränkt oder in einem bestimmten eingeschränkten Wellenbereich durchlassen. Weil oft im Außenbereich des Fahrzeugs angeordnet sind, sind sie Verschmutzungen und äußeren Witterungseinflüssen ausgesetzt und müssen zur Funktionsgewährleistung bei Bedarf durch ein Reinigungssystem gereinigt oder enteist werden.

Beim autonomen oder teilautonomen Fahren müssen die Erfassungsvorrichtungen stets ohne einen Fahrereingriff funktionsfähig sein, diese Forderung überträgt sich zwangsweise an das entsprechende Reinigungssystem, welches ebenfalls stets betriebsbereit sein muss. Dies betrifft auch die Vorratsmenge und die ausreichende Frostbeständigkeit des Reinigungsmittels.

Im Hinblick auf die aus dem autonomen Fahren erwachsenen Anforderungen bieten die bekannten Reinigungssysteme viele Nachteile oder sind schlicht ungeeignet. Beispielsweise kann der Fahrer alleine nicht den Verschmutzungsgrad einzelner Sensoren oder Kameras bewerten, da er im Wesentlichen lediglich die Windschutzscheibe und gegebenenfalls die Rückscheibe im Blick hat. Wird jedoch der Reinigungsbedarf aller Komponenten alleine vom Fahrer gesteuert, kann es vorkommen, dass manche Verbraucher, insbesondere im Heckbereich, wegen nicht erkannter stärkerer Verschmutzung ausfallen.

Beispielsweise aus DE 10 2009 012 010 A ist eine Scheibenwaschanlage bekannt, welche zusätzlich zu einem Waschwasserbehälter einen mehrkammerigen Konzentratvorratsbehälter zur Aufnahme verschiedener flüssiger Waschkonzentrate oder Frostschutzmittel umfasst. Das Frostschutzmittel kann gezielt dosiert dem Waschwasserbehälter zugefügt mittels einer zwischengeschalteten Pumpe, welche von durch einen gesonderten Temperaturfühler im Waschwasserbehälter angesteuert wird. Sensoreinheit 2 entsprechend angesteuert wird. Die unterschiedlichen Waschkonzentrate können unmittelbar in die Waschwasserleitungen mittels gesonderter Dosierpumpen eingespritzt werden, welche manuell vom Fahrer oder durch einen optischen Sensor in der Windschutzscheibe gesteuert werden, welcher die Verschmutzung der Windschutzscheibe registriert.

Beispielsweise aus DE 101 55 113 A1 ist eine elektronisch steuerbare Waschanlage gemäß dem Oberbegriff des Anspruchs 1 bekannt.

Der Funktionsumfang einer derartigen Waschanlage ist jedoch auf die Windschutzscheibe beschränkt und für komplexere Reinigungsanlagen und Anwendungsszenarien nicht ohne Weiteres adaptierbar. Des Weiteren sind derartige Reinigungssysteme sind nicht oder nur ungenügend erweiterungsfähig, um beispielsweise je nach Fahrzeug und dessen Konfiguration unterschiedliche Anzahl von Kameras und anderen Verbrauchern zu reinigen und dadurch nur aufwändig an spezifische Kundenwünsche anpassbar. Werden mehrere Komponenten zusammen geschaltet, werden einige Komponenten unnötig zwangsgereinigt, obwohl es nicht explizit erforderlich wäre.

Wird der Reinigungsbedarf aller Komponenten sicherheitshalber an den Bedarf der verschmutzungsanfälligsten Komponente wie beispielsweise Heckkamera angepasst, wird ein überproportional hoher Reinigungsmittelverbrauch die Folge sein, welcher nur uneffektiv durch das Mitführen von Mehrmengen des Reinigungsmittels und dadurch Reduzierung des Nutzvolumens zu kompensieren. Wenn das Reinigungsmittel beispielsweise, aufgrund von unerwarteten Wetterereignissen, insbesondre während der Fahrt eingefroren oder frühzeitig verbraucht wird, ist die Funktion der Reinigung nicht gegeben und die der Kameras und Sensoren höchst gefährdet.

Auch andere Betriebsszenarien stellen erhöhte Anforderungen an eine zuverlässige Verfügbarkeit des Reinigungssystems wie beispielsweise beim Carsharing, mit häufig und oft hoch frequentiert wechselnden Fahrern.

Vor diesem Hintergrund liegt der Erfindung die Aufgabe zugrunde, ein besonders effektives Reinigungssystem mit einem verringerten Reinigungsmittelverbrauch anzubieten, welches sich möglichst fahrerunabhängig sowie adaptiv auf die stets veränderlichen Betriebsbedingungen einstellt und somit besonders gut für das autonome Fahren geeignet ist, zusätzlich effektive konstruktive Erweiterungs- und Anpassungsmöglichkeiten bietet.

Diese Aufgabe wird durch die Merkmale des unabhängigen Anspruchs gelöst.

Weiterbildungen und verschiedene Ausführungsbeispiele der Erfindung ergeben sich aus den Unteransprüchen und der nachfolgenden Beschreibung und Figuren. Mit den Merkmalen nach dem Unabhängigen Anspruch 1 wird es möglich, ein intelligentes, aktiv geregeltes, adaptives Reinigungssystem zu gestalten, das sich als integrativer Bestandteil des Fahrzeuges integrieren lässt und Mittel bietet, welche mit Ausnutzung diverser im modernen Fahrzeug verfügbaren Informationsquellen eine vorausschauende Adaption an Änderungen der Betriebsbedingungen reagier und einwandfreie Funktion aller optischer Erfassungsvorrichtungen unter allen Witterungsbedingungen sicherstellt. Insbesondere bei kalten Witterungsverhältnissen kann die Funktionsfähigkeit des Reinigungssystems zuverlässig aufrechterhalt werden. So kann beispielsweise durch gesonderte Druckverstärkungspumpen einer kältebedingt erhöhten Viskosität der Reinigungsflüssigkeit entgegengewirkt werden.

Der individuelle reinigungsbedarf einzelner Scheiben, Kameras, Sensoren und anderer Verbraucher kann individuell bestimmt und die Reinigung bedarfsoptimiert sparsam erfolgen.

Durch die Verknüpfung der Informationen in der Steuereinheit ist ein zuverlässiges Funktionieren des Reinigungssystems unter den verschiedensten Betriebszuständen gegeben. Durch die individuelle Reinigung von jedem einzelnen Verbraucher wird mit dem zur Verfügung stehenden Reinigungsmittelvorrat eine größere Anzahl von Reinigungsvorgängen und längere Betriebsdauer ermöglicht.

Das erfindungsgemäße Reinigungssystem kann Hauptpumpen in Verbindung mit einem individualisierten Verteilsystem mit zusätzlichen Druckverstärkungspumpen und diversen elektrisch ansteuerbaren Komponenten realisieren um optimal den speziellen Bedarf einzelner Verbraucher zu bedienen. Beispielsweise kann ein Hochdruck lediglich unmittelbar vor der Austrittsöffnung erzeugt werden und so die Systemträgheit verringert und Hochdruckleitungen eingespart werden.

Bestimmte hierzu befähigte optische oder optoelektronische Erfassungsvorrichtungen können ihren Verschmutzungsgrad selbständiges erkennen, beispielsweise durch Analyse der Lichtstreuung und/oder Lichtbrechung an transparenten Komponenten oder der einfallenden Lichtmenge, und an die elektronische Steuereinrichtung übermitteln. Daraufhin kann die Reinigung des betroffenen Verbrauchers durch die Steuereinrichtung gezielt initiiert werden, indem die entsprechenden Pumpen und/oder Ventile angesteuert werden.

Um den Wasserverbrauch weiter zu senken kann eine Dosierung des Reinigungsmittels durch Mengenbegrenzungsvorrichtungen erfolgen. Diese kann entweder durch konstruktiv programmierten Zwangsportionierungsvorrichtungen, aber auch durch Schaltventile oder das zeitdiskrete Ansteuern von Verdrängerpumpen, beispielsweise Zahnradpumpen geschehen.

Vervollständigt wird das System durch eine Multileveldetektion der Flüssigkeitsstände der Reinigungsflüssigkeit und von Additiven wie beispielsweise Frostschutz- oder Reinigungskonzentrat, sowie gleichzeitiger Detektion der Frostbeständigkeit der Reinigungsmittelst durch einen Gefrierpunktsensor. Bei sinkenden Temperaturen kann somit automatisch aus einem gesonderten Behältnis Frostschutzkonzentrat in den Behälter der Reinigungsflüssigkeit umgefüllt werden um das Einfrieren sicher zu verhindern. Ein automatisches Spülen, bzw. Verbrauchen der in den Leitungen stehenden Reinigungsflüssigkeit kann durch Evakuierungsvorrichtung erfolgen, beispielsweise sobald die Temperaturen unterhalb des Gefrierpunkts des in der Leitung befindlichen Reinigungsmittelgemisches sinken.

Ein weiterer Vorteil eines intelligenten Reinigungssystems besteht darin, bei sinkendem Flüssigkeitsstand im Reinigungsmittelbehältnis Prioritäten bei der Komponentenreinigung durchzuführen. So wäre es denkbar, die reinigungsintensive Heckkamera bei Vorwärtsfahrt abzuschalten, den Fahrer zu warnen und die verbleibende Flüssigkeitsmenge auf wichtigere Verbraucher solange "umzuleiten", bis eine Wiederauffüllung des Reinigungsmittels erfolgt ist.

Ein weiterer Vorteil ist bei Kennen des Gefrierpunktes und des verwendeten Additivs ist die Berechnung der Viskosität des Reinigungsmittels. So kann die Pumpenansteuerungszeit angepasst und bei Kälte verlängert werden.

Das Reinigungsmittelbehältnis kann je nach Bedarf als Einzelbehälter- oder als ein Doppelbehälter für Reinigungsmittel und Additiv oder als ein Behälter mit Kartuschenoption gestaltet sein, wobei das Additiv als eine leicht wechselbare Kartusche beziehungsweise Wechseleinsatz dem Reinigungssystem zugeführt werden kann.

Die Erfindung betrifft weiterhin ein Fahrzeug, in dem das erfindungsgemäße Reinigungssystem verbaut ist.

Die vorliegende Erfindung wird nachfolgend anhand der in den Figuren vereinfacht dargestellten Ausführungsbeispiele näher erläutert. Hierbei zeigt:
Fig.1 eine vereinfachte Prinzipdarstellung einer Ausführungsform des erfindungsgemäßem Reinigungssystems.
Fig.2 eine beispielhafte Ausführung eines Verbrauchermoduls.
Fig.3 eine prinzipielle stark vereinfachte Übersicht einer weiteren erfindungsgemäßen Ausführungsform des Reinigungssystems, wobei die elektronische Steuereinheit und elektrische Anschlusseitigen nicht dargestellt sind.
Fig.4 eine stark vereinfachte Prinzipskizze einer Systemkonfiguration einer möglichen Ausführungsform des Reinigungssystems.
Fig.5 gemäß einer erfindungsgemäßen Ausführung in einem gemeinsamen Behältergehäuse kombinierten Reinigungsmittelbehältnis und Additivbehältnis.

In allen Figuren sind die gleichen bzw. äquivalenten Elemente und Vorrichtungen, sofern nichts anderes angegeben, mit denselben Bezugszeichen versehen.

### Fig.1

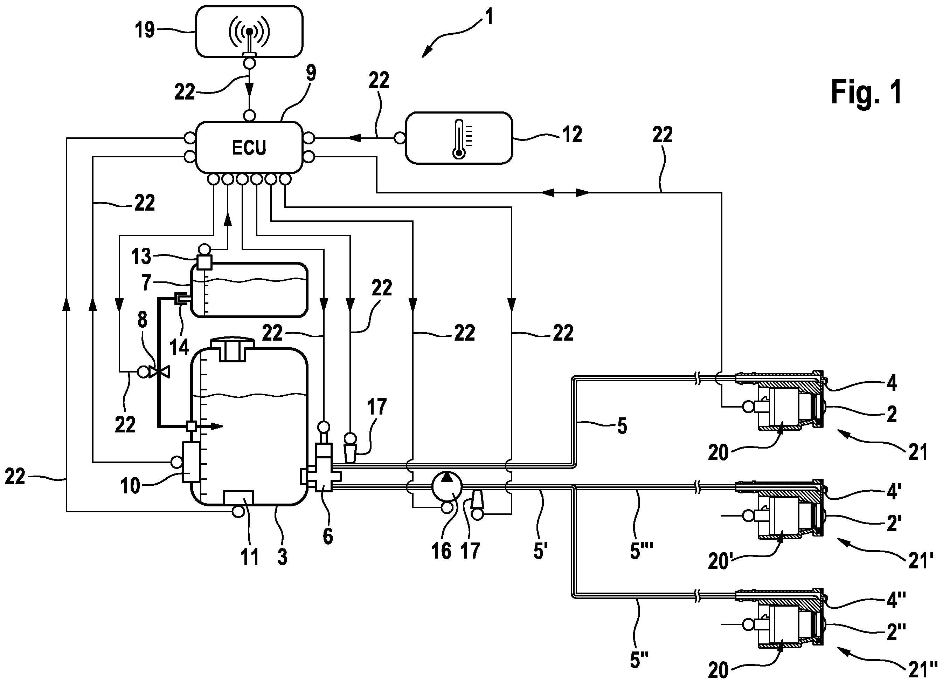

Fig.1 zeigt stark vereinfacht eine Ausführungsform des erfindungsgemäßen elektronisch geregelten Reinigungssystems 1. Das Reinigungssystem 1 ist zum Einbau in einem Fahrzeug und zum Reinigen eines oder mehreren transparenten Elemente 2 durch eine oder mehrere Austrittsöffnung 4 vorgesehen. Als transparentes Element 2 ist insbesondere eine Komponente wie eine Objektivlinse oder Abdeckglas einer optischen oder optoelektronischen Erfassungsvorrichtung 20 wie beispielsweise einer Kamera oder eines LiDARs geeignet, wobei auch die Sichtscheiben oder Scheinwerfergläser ebenso zulässig sind.

Die Reinigung erfolgt mit einem fluiden Reinigungsmittel, insbesondere einem Wassergemisch aus Wasser und einem oder mehreren Additiven wie Frostschutz- oder Reinigungsmittelkonzentrat. Das gebrauchsfertig gemischte Reinigungsmittel ist im Fahrzeug in einem Reinigungsmittelbehältnis 3 aufbewahrt.

Eine elektrisch ansteuerbare, vorzugsweise als eine elektromotorisch angetriebene Strömungspumpe ausgebildete Hauptpumpe 6 fördern das Reinigungsmittel aus dem Reinigungsmittelbehältnis 3 unter Druck durch die hydraulischen Leitungen 5,-5‴ zu den Austrittsöffnungen 4, 4', 4", welche das Reinigungsmittel auf die transparenten Elemente 2, 2', 2" versprühen. Eine Austrittsöffnung 4 kann innerhalb der Erfindung beliebig gestaltet werden - beispielsweise als eine Bohrung, eine Düse, ein Deflektor und Dergleichen.

Ein für das Beimischen zum Reinigungsmittel vorgesehene Additiv wird in einem Additivbehältnis 7 aufbewahrt.

Eine elektrisch schaltbare Dosiervorrichtung 8 dient zum kontrollierten Beimischung des Additivs zum Reinigungsmittel.

Innerhalb der Erfindung kann die Dosiervorrichtung 8 beispielsweise als ein Schaltventil ausgebildet sein, welches zwischen einer geschlossenen und einer geöffneten Stellung schaltbar ist und in der geöffneten Stellung die hydraulische Verbindung zwischen dem Additivbehältnis 7 und dem Reinigungsmittelbehältnis 3 freigibt.

Ebenso kann die Dosiervorrichtung 8 als eine Verdrängerpumpe ausgebildet sein, welche aus einem deaktivierten Zustand in einen aktivierten Zustand einschaltbar ist, wobei sie im deaktivierten Zustand nicht durchströmbar ist und im aktivierten Zustand eine definierte Menge Additiv pro Zeiteinheit in das Reinigungsmittelbehältnis fördert.

Eine elektronische Steuereinheit 9, steuert sämtliche elektrisch steuerbaren Komponenten des Reinigungssystem 1 und ist mit diesen über elektrische Verbindungsleitungen 22 verbunden.

Ein Reinigungsmittelfüllstandsensor 10, und ein Additivfüllstandsensor 13 überwachen die Füllstände in den jeweiligen Behältnissen und übermitteln diese an die elektronische Steuereinheit 9.

Mithilfe eines Gefrierpunktsensors 11, wird der mischungsabhängige Gefrierpunkt des Reinigungsmittels im Reinigungsmittelbehältnis 3 gemessen und an die elektronische Steuereinheit 9 übermittelt.

Die Umgebungstemperatur außerhalb des Fahrzeugs wird durch ein Umgebungstemperatursensor 12 gemessen und ebenfalls an die elektronische Steuereinheit 9 übertragen

Das Additivbehältnis 7 ist bei der dargestellten Ausführung als eine Wechseleinsatzeinheit beziehungsweise eine Wechselkartusche ausgebildet ist, welche über eine Kupplungsschnittstelle 14 an das Reinigungssystem 1 angeschlossen ist.

Innerhalb der Erfindung kann ein wechselbares Additivbehältnis 7 auch in einem gemeinsamen Gehäuse mit dem Reinigungsmittelbehältnis 3 angeordnet werden, so dass die erforderliche Kupplungsschnittstelle 14 in oder am Gehäuse vom Reinigungsmittelbehältnis 3 angeordnet wäre.

In der hydraulischen Leitung 5 zwischen der Hauptpumpe 6 und der Austrittsöffnung 4 ist eine elektrisch steuerbare Druckverstärkungspumpe 16 angeordnet. Hierdurch wird der Druck in der hydraulischen Leitung 5 lokal zwischen der Druckverstärkungspumpe 16 und Austrittsöffnung 4 erhöht.

In der gezeigten Ausführungsform sind unmittelbar hinter der Hauptpumpe 6 beziehungsweise Druckverstärkungspumpe 16 elektrisch steuerbare Evakuierungsvorrichtungen 17 angeordnet. Sie dient zum Evakuieren des Reinigungsmittels im Abschnitt der hydraulischen Leitung zwischen der Evakuierungsvorrichtung 17 und der Austrittsöffnung 4 um beispielsweise dessen Einfrieren und die damit einhergehende Verstopfung der Leitung 5 zu vermeiden.

Innerhalb der Erfindung kann die Evakuierungsvorrichtung 17 als ein elektrisch schaltbares Drosselventil ausgebildet sein, welches seiner geöffneten Stellung das Reinigungsmittel aus der hydraulischen Leitung 5 ablässt. Ebenso kann die Evakuierungsvorrichtung 17 als eine elektrisch ansteuerbare, beispielsweise mit einem Kompressor verbundene Lufteinblasvorrichtung ausgebildet ist, welche bei Bedarf Luft mit Überdruck in die hydraulische Leitung 5 einbläst und so das Reinigungsmittel durch die Austrittsöffnung 4 herausdrängt.

Eine Fahrzeugintegrierte Positionserkennungseinheit 19 wie beispielsweise ein GPS-Sensor, übermittelt die aktuelle Position des Fahrzeugs an die elektronische Steuereinheit übermittelt. In Verbindung mit beispielsweise im Fahrzeug gespeicherten Kartendaten kann beispielsweise die Entfernung zu nächsten Servicestation berechnet und eine kontextbezogene Warnung bei niedrigen Füllständen in den Behältnissen 3,7 abgegeben werden. Wenn das Fahrzeug über einen mobilen Internetzugang verfügt konnten beispielsweise Wetterdaten abgegriffen werden und in Verbindung mit Positionsinformationen vorsorglich dem Reinigungsmittel Frostschutzkonzentrat beigemischt werden und die hydraulische Leitungen evakuiert werden.

In der gezeigten Ausführung sind die zu reinigende Verbraucher als optische Komponenten einer Erfassungsvorrichtung 20 dargestellt, welche in einem gemeinsamen Gehäuse mit der Austrittsöffnung 4 positioniert ist und so ein einfach handhabbares Verbrauchermodul 21 bildet.

### Fig.2

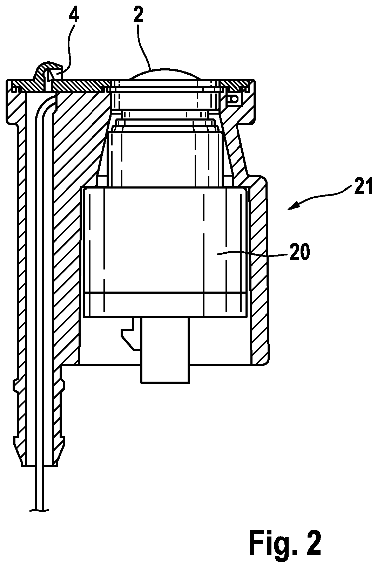

Ein derartiges Verbrauchermodul 21 ist in der Fig.2 beispielhaft dargestellt. Das zu reinigende transparente Element 2 ist eine Komponente einer optischen oder optoelektronischen Erfassungsvorrichtung 20, beispielsweise die Linse einer Kamera. Die Erfassungsvorrichtung 20 ist zur beidseitigen Daten- und Informationsübertragung mit der elektronischen Steuereinheit 9 geeignet und kann so durch relativ einfache Überwachung vom Verhalten des Lichts am transparenten Element 2 seinen Verschmutzungsgrad erkennen und an die elektronischen Steuereinheit 9 übermitteln, welche dann bei Bedarf die zur gezielten Reinigung ebendieser Erfassungsvorrichtung benötigte Menge des Reinigungsmittels berechnet und die erforderlichen Komponenten für die berechnete Zeit aktiviert.

### Fig.3

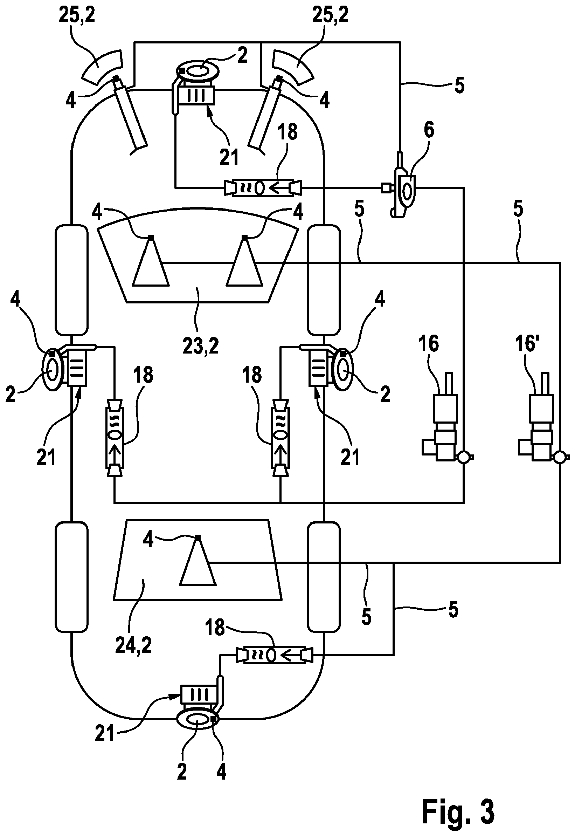

In der Fig.3 ist der hydraulische Anteil eine weiteren möglichen erfindungsgemäße Ausführungsform des Reinigungssystems 1 vereinfacht dargestellt. Zusätzlich zu den vier Verbrauchermodulen 21 werden hier auch die Windschutzscheibe 23, die Heckscheibe 24 sowie die Scheinwerferscheiben 25 gereinigt.

Als eine Besonderheit bei dieser Ausführung sind an diversen Stellen der hydraulischen Leitung 5 zwischen einer der Pumpen 6,16 Austrittsöffnungen 4 eine Mengenbegrenzungsvorrichtung 8 angeordnet. Durch diese kann der Durchfluss durch die hydraulische Leitung 5 nach einer definierten durchflossenen Fluidmenge definiert unterbrochen werden um dadurch beispielsweise kurze, intensive Sprühstöße zu realisieren oder das Reinigungsmittel einzusparen.

Innerhalb der Erfindung kann die Mengenbegrenzungsvorrichtung 18 beispielsweise als ein elektrisch schaltbares, insbesondere stromlos geschlossenes Ventil ausgebildet sein, welches, durch die Steuereinheit 9 angesteuert, den Durchfluss durch die hydraulische Leitung 5 nur für kurze Zeitabstände freigibt und ansonsten sperrt.

Ebenso kann die Mengenbegrenzungsvorrichtung 18 wie gezeigt als eine Zwangsportionierungsvorrichtung mit einem druckgesteuert verschiebbares Trennelement ausgebildet sein, welche die hydraulische Leitung 5 hach dem Passieren einer konstruktiv vorgegebenen Fluidmenge zwangsweise sperrt.

### Fig.4

Um die Anpassbarkeit des erfindungsgemäßen Reinigungssystems 1 zu verdeutlichen wird hier eine der vielen möglichen Konfigurationen prinzipiell dargestellt. Von einer Hauptpumpe 6 gehen vier hydraulisch stränge ab, von denen jeder unterschiedlich konfiguriert ist. So enden zwei der Stränge jeweils mit Verbrauchermodulen 21, wobei bei einem diese Stränge dem Verbrauchermodul eine Mengenbegrenzungsvorrichtung 18 und dem anderen eine Druckverstärkungspumpe 16 vorgesetzt ist. Die Anderen zwei Stränge, ebenfalls einer mit der Mengenbegrenzungsvorrichtung 18 und der andere mit Druckverstärkungspumpe 16 enden an einfachen Austrittsöffnungen 4 um beispielsweise die Windschutzscheibe zu reinigen. Jedes dieser Stränge kann jedoch mit dem erfindungsgemäßen Reinigungssystem individuell angesteuert werden.

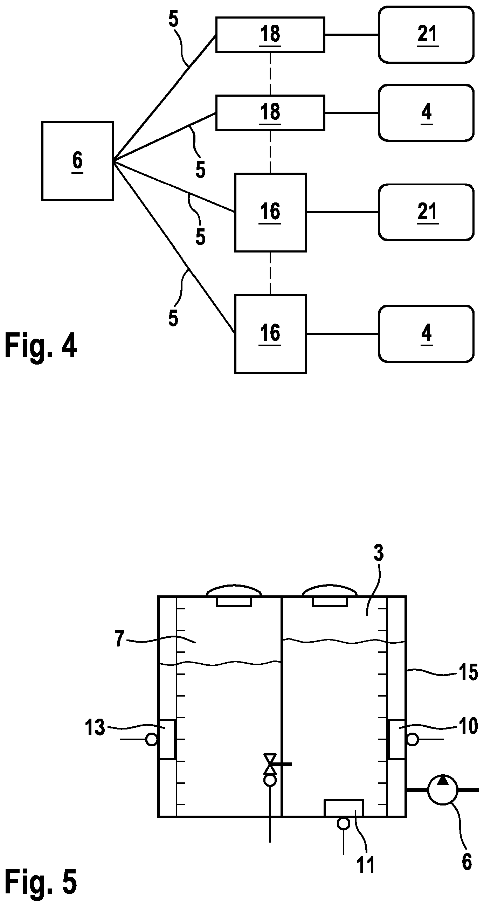

Fig.5 zeigt beispielhaft eine weitere erfindungsgemäße Ausführung, bei der das Reinigungsmittelbehältnis 3 als eine Reinigungsmittelkammer für das gebrauchsfertige Reinigungsmittel und das Additivbehältnis 7 als eine Additivkammer untrennbar in einem gemeinsamen Behältergehäuse 15 ausgebildet sind.

### Bezugszeichenliste

- 1: Reinigungssystem
- 2: Transparentes Element
- 3: Reinigungsmittelbehältnis
- 4: Austrittsöffnung
- 5: Hydraulische Leitung
- 6: Hauptpumpe
- 7: Additivbehältnis
- 8: Dosiervorrichtung
- 9: Elektronische Steuereinheit
- 10: Reinigungsmittelfüllstandsensor
- 11: Gefrierpunktsensor
- 12: Umgebungstemperatursensor
- 13: Additivfüllstandsensor
- 14: Kupplungsschnittstelle
- 15: Behältergehäuse
- 16: Druckverstärkungspumpe
- 17: Evakuierungsvorrichtung
- 18: Mengenbegrenzungsvorrichtung
- 19: Positionserkennungseinheit
- 20: Optische oder optoelektronische Erfassungsvorrichtung
- 21: Verbrauchermodul
- 22: Elektrische Verbindungsleitung
- 23: Windschutzscheibe
- 24: Heckscheibe
- 25: Scheinwerferscheibe

## Patentansprüche

1. Elektronisch geregeltes Reinigungssystem (1) zum Einbau in einem Fahrzeug zum Reinigen von mindestens einem transparenten Element (2) mit einem fluiden Reinigungsmittel, umfassend:
• Wenigstens ein Reinigungsmittelbehältnis (3) zum Aufbewahren des gebrauchsfertigen Reinigungsmittels,
• Wenigstens eine Austrittsöffnung (4) zum versprühen des Reinigungsmittels auf das transparente Element (2),
• Wenigstens eine hydraulische Leitung (5), welche das Reinigungsmittelbehältnis (3) mit der Austrittsöffnung (4) verbindet,
• Wenigstens eine elektrisch steuerbare Hauptpumpe (6) zum fördern des Reinigungsmittels aus dem Reinigungsmittelbehältnis (3) in die hydraulische Leitung (5)
• Wenigstens ein Additivbehältnis (7) zum Aufbewahren eines für das Beimischen zum Reinigungsmittel vorgesehenen Additivs,
• Wenigstens einer elektrisch schaltbaren Dosiervorrichtung (8) zur kontrollierten Beimischung des Additivs zum Reinigungsmittel,
• Wenigstens eine Elektronische Steuereinheit (9), welche die elektrisch steuerbaren Komponenten des Reinigungssystem (1) adaptiv steuert.
• Wenigstens einen Reinigungsmittelfüllstandsensor (10), welcher den Füllstand des Reinigungsmittels im Reinigungsmittelbehältnis (3) überwacht und an die elektronische Steuereinheit (9) übermittelt,
• Wenigstens einen Gefrierpunktsensor (11), welcher den mischungsabhängigen Gefrierpunkt des Reinigungsmittels im Reinigungsmittelbehältnis (3) überwacht und an die elektronische Steuereinheit (9) übermittelt,
• Wenigstens einen Umgebungstemperatursensor (12), welcher die Umgebungstemperatur außerhalb des Fahrzeugs überwacht und an die elektronische Steuereinheit (9) übermittelt.
**dadurch gekennzeichnet, dass** in der hydraulischen Leitung (5) zwischen der Hauptpumpe (6) und der Austrittsöffnung (4) wenigstens eine elektrisch steuerbare Druckverstärkungspumpe (16) angeordnet ist, welche einen durch die Hauptpumpe (6) in der hydraulischen Leitung (5) erzeugten hydraulischen Druck in Richtung Austrittsöffnung (4) verstärkt.

2. Reinigungssystem (1) nach Anspruch 1 **dadurch gekennzeichnet, dass** ein Additivfüllstandsensor (13) vorgesehen ist, welcher den Füllstand des Additivs im Additivbehältnis (7) überwacht und an die elektronische Steuereinheit (9) übermittelt.

3. Reinigungssystem (1) nach Anspruch 1 **dadurch gekennzeichnet, dass** das Additivbehältnis (7) als eine Wechseleinsatzeinheit beziehungsweise eine Wechselkartusche ausgebildet ist, welche über eine Kupplungsschnittstelle (14) an das Reinigungssystem (1) anschließbar ist und deren Nachfüllung mit dem Additiv gar nicht oder zumindest nicht im Fahrzeug vorgesehen ist.

4. Reinigungssystem (1) nach Anspruch 1 oder 2 **dadurch gekennzeichnet, dass** das Reinigungsmittelbehältnis (3) und Additivbehältnis (7) untrennbar in einem gemeinsamen Behältergehäuse (15) ausgebildet sind.

5. Reinigungssystem (1) nach wenigstens einem der Ansprüche 1 bis 4 **dadurch gekennzeichnet, dass** die Dosiervorrichtung (8) als ein Schaltventil ausgebildet ist, welches zwischen einer geschlossenen und einer geöffneten Stellung schaltbar ist und in der geöffneten Stellung eine hydraulische Verbindung zwischen dem Additivbehältnis (7) und dem Reinigungsmittelbehältnis (3) freigibt.

6. Reinigungssystem (1) nach wenigstens einem der Ansprüche 1 bis 4 **dadurch gekennzeichnet, dass** die Dosiervorrichtung (8) als eine Verdrängerpumpe ausgebildet ist, welche aus einem deaktivierten Zustand in einen aktivierten Zustand einschaltbar ist, wobei sie im deaktivierten Zustand nicht durchströmbar ist und im aktivierten Zustand eine definierte Menge Fluid pro Zeiteinheit fördert.

7. Reinigungssystem (1) nach wenigstens einem der vorstehenden Ansprüche **dadurch gekennzeichnet, dass** in der hydraulischen Leitung (5) zwischen der Hauptpumpe (6) oder der Druckverstärkungspumpe (16) einerseits und der Austrittsöffnung (4) andererseits eine Mengenbegrenzungsvorrichtung (18) angeordnet ist, welche den Durchfluss durch die hydraulische Leitung (5) nach einer definierten durchflossenen Fluidmenge unterbricht.

8. Reinigungssystem (1) nach Anspruch 7 **dadurch gekennzeichnet, dass** die Mengenbegrenzungsvorrichtung (18) als ein elektrisch schaltbares Ventil ausgebildet ist, welches zwischen einer geschlossenen und einer geöffneten Stellung durch die elektronische Steuereinrichtung schaltbar ist und in der geschlossenen Stellung den Durchfluss durch die hydraulische Leitung (5) sperrt.

9. Reinigungssystem (1) nach Anspruch 7 **dadurch gekennzeichnet, dass** die Mengenbegrenzungsvorrichtung (18) als eine Zwangsportionierungsvorrichtung ausgebildet ist, welche die hydraulische Leitung (5) hach dem Passieren einer konstruktiv vorgegebenen Fluidmenge zwangsweise sperrt.

10. Reinigungssystem (1) nach wenigstens einem der vorstehenden Ansprüche **dadurch gekennzeichnet, dass** wenigstens ein Positionserkennungseinheit (19) vorgesehen ist, welche die aktuelle Position des Fahrzeugs ermittelt und an die elektronische Steuereinheit (9) übermittelt.

11. Reinigungssystem (1) nach wenigstens einem der vorstehenden Ansprüche **dadurch gekennzeichnet, dass** das Fahrzeug über wenigstens einen mobilen Internetzugang verfügt.

12. Reinigungssystem (1) nach wenigstens einem der vorstehenden Ansprüche **dadurch gekennzeichnet, dass** im Additiv ein Frostschutzmittelkonzentrat enthalten ist.

13. Reinigungssystem (1) nach wenigstens einem der vorstehenden Ansprüche **dadurch gekennzeichnet, dass** im Additiv ein Reinigungsmittelkonzentrat enthalten ist.

14. Reinigungssystem (1) nach wenigstens einem der vorstehenden Ansprüche **dadurch gekennzeichnet, dass** wenigstens ein transparentes Element (2) eine Komponente einer optischen oder optoelektronischen Erfassungsvorrichtung (20) ist, wobei die Erfassungsvorrichtung (20) zur beidseitigen Datenübertragung mit der elektronischen Steuereinheit (9) eingerichtet ist.

15. Reinigungssystem (1) nach Anspruch 14 **dadurch gekennzeichnet, dass** die Erfassungsvorrichtung (20) dazu befähigt ausgebildet ist, einen Verschmutzungsgrad des transparenten Elements (2) zu erkennen und an die elektronische Steuereinheit (9) zu übermitteln.

16. Reinigungssystem (1) nach Anspruch 14 oder 15 **dadurch gekennzeichnet, dass** die Erfassungsvorrichtung (20) zusammen mit wenigstens einer Austrittsöffnung (4) in einem Verbrauchermodul (21) zusammengefasst ist.

17. Reinigungssystem (1) nach Anspruch 14 **dadurch gekennzeichnet, dass** mindestens vier Erfassungsvorrichtungen (20) im Fahrzeug verbaut und zur Reinigung durch das Reinigungssystem (1) eingerichtet sind.

18. Reinigungssystem (1) nach wenigstens einem der vorstehenden Ansprüche **dadurch gekennzeichnet, dass** in der hydraulischen Leitung (5) zwischen der Hauptpumpe (6) und der Austrittsöffnung (4) eine elektrisch steuerbare Evakuierungsvorrichtung (17) zum Evakuieren eines in der hydraulischen Leitung enthaltenen Reinigungsmittels angeordnet ist, wobei die Evakuierungsvorrichtung (17) in Richtung Austrittsöffnung (4) im Wesentlichen unmittelbar hinter der Hauptpumpe (6) oder unmittelbar hinter der Druckverstärkungspumpe (16) positioniert ist.

19. Reinigungssystem (1) nach Anspruch 18 **dadurch gekennzeichnet, dass** die Evakuierungsvorrichtung (17) als ein elektrisch schaltbares Drosselventil ausgebildet ist, welches zwischen einer geschlossenen und einer geöffneten Stellung schaltbar ist und in der geöffneten Stellung das Reinigungsmittel aus der hydraulische Leitung (5) ablässt.

20. Reinigungssystem (1) nach Anspruch 18 **dadurch gekennzeichnet, dass** die Evakuierungsvorrichtung (17) als eine elektrisch ansteuerbare Lufteinblasvorrichtung ausgebildet ist, welche aus einem deaktivierten Zustand in einen aktivierten Zustand versetzbar ist wobei sie im deaktivierten Zustand geschlossen ist und im aktivierten Zustand Luft mit Überdruck in die hydraulische Leitung (5) einbläst.

21. Fahrzeug, in dem ein Reinigungssystem (1) nach einem der Ansprüche 1 bis 20 verbaut ist.

## Claims

1. Electronically controlled cleaning system (1) for installation in a vehicle for cleaning at least one transparent element (2) with a fluid cleaning agent, comprising:
• at least one cleaning agent container (3) for storing the cleaning agent ready for use,
• at least one outlet opening (4) for spraying the cleaning agent onto the transparent element (2),
• at least one hydraulic line (5), which connects the cleaning agent container (3) to the outlet opening (4),
• at least one electrically controllable main pump (6) for conveying the cleaning agent from the cleaning agent container (3) into the hydraulic line (5),
• at least one additive container (7) for storing an additive provided to be mixed with the cleaning agent,
• at least one electrically switchable metering device (8) for controlled mixing of the additive with the cleaning agent,
• at least one electronic control unit (9), which controls the electrically controllable components of the cleaning system (1) adaptively,
• at least one cleaning agent level sensor (10), which monitors the level of the cleaning agent in the cleaning agent container (3) and transmits it to the electronic control unit (9),
• at least one freezing point sensor (11), which monitors the mixture-dependent freezing point of the cleaning agent in the cleaning agent container (3) and transmits it to the electronic control unit (9),
• at least one ambient temperature sensor (12), which monitors the ambient temperature outside the vehicle and transmits it to the electronic control unit (9),
**characterized in that** at least one electrically controllable pressure boost pump (16), which boosts a hydraulic pressure generated in the hydraulic line (5) by the main pump (6) in the direction of the outlet opening (4), is arranged in the hydraulic line (5) between the main pump (6) and the outlet opening (4).

2. Cleaning system (1) according to Claim 1, **characterized in that** an additive level sensor (13) is provided, which monitors the level of the additive in the additive container (7) and transmits it to the electronic control unit (9).

3. Cleaning system (1) according to Claim 1, **characterized in that** the additive container (7) is formed as a replaceable insert unit or a replaceable cartridge, which can be connected to the cleaning system (1) via a coupling interface (14) and the refilling of which with the additive is not provided or at least not in the vehicle.

4. Cleaning system (1) according to Claim 1 or 2, **characterized in that** the cleaning agent container (3) and additive container (7) are formed inseparably in a common container housing (15).

5. Cleaning system (1) according to at least one of Claims 1 to 4, **characterized in that** the metering device (8) is formed as a switching valve, which can be switched between a closed and an open position and, in the open position, opens a hydraulic connection between the additive container (7) and the cleaning agent container (3).

6. Cleaning system (1) according to at least one of Claims 1 to 4, **characterized in that** the metering device (8) is formed as a displacement pump, which can be switched from a deactivated state to an activated state, wherein fluid cannot flow through it in the deactivated state and, in the activated state, it conveys a defined volume of fluid per unit time.

7. Cleaning system (1) according to at least one of the preceding claims, **characterized in that** a volume limiting device (18), which interrupts the flow through the hydraulic line (5) after a defined volume of fluid has flowed through, is arranged in the hydraulic line (5) between the main pump (6) or the pressure boost pump (16), on the one hand, and the outlet opening (4), on the other hand.

8. Cleaning system (1) according to Claim 7, **characterized in that** the volume limiting device (18) is formed as an electrically switchable valve, which can be switched between a closed and an open position by the electronic control device and, in the closed position, blocks the flow through the hydraulic line (5).

9. Cleaning system (1) according to Claim 7, **characterized in that** the volume limiting device (18) is formed as a forcible metering device, which blocks the hydraulic line (5) forcibly after a volume of fluid specified by the design has passed through.

10. Cleaning system (1) according to at least one of the preceding claims, **characterized in that** at least one position detection unit (19) is provided, which determines the current position of the vehicle and transmits it to the electronic control unit (9).

11. Cleaning system (1) according to at least one of the preceding claims, **characterized in that** the vehicle has at least one mobile Internet access.

12. Cleaning system (1) according to at least one of the preceding claims, **characterized in that** a frost protection agent concentrate is contained in the additive.

13. Cleaning system (1) according to at least one of the preceding claims, **characterized in that** a cleaning agent concentrate is contained in the additive.

14. Cleaning system (1) according to at least one of the preceding claims, **characterized in that** at least one transparent element (2) is a component of an optical or optoelectronic detection device (20), wherein the detection device (20) is set up for bidirectional data transmission with the electronic control unit (9).

15. Cleaning system (1) according to Claim 14, **characterized in that** the detection device (20) is designed to be capable of detecting a level of contamination of the transparent element (2) and transmitting it to the electronic control unit (9).

16. Cleaning system (1) according to Claim 14 or 15, **characterized in that** the detection device (20) is combined together with at least one outlet opening (4) in a consumer module (21).

17. Cleaning system (1) according to Claim 14, **characterized in that** at least four detection devices (20) are installed in the vehicle and are set up to be cleaned by the cleaning system (1).

18. Cleaning system (1) according to at least one of the preceding claims, **characterized in that** an electrically controllable evacuation device (17) for evacuating a cleaning agent contained in the hydraulic line is arranged in the hydraulic line (5) between the main pump (6) and the outlet opening (4), wherein, in the direction of the outlet opening (4), the evacuation device (17) is positioned substantially immediately downstream of the main pump (6) or immediately downstream of the pressure boost pump (16).

19. Cleaning system (1) according to Claim 18, **characterized in that** the evacuation device (17) is formed as an electrically switchable throttle valve, which can be switched between a closed and an open position and, in the open position, discharges the cleaning agent out of the hydraulic line (5).

20. Cleaning system (1) according to Claim 18, **characterized in that** the evacuation device (17) is formed as an electrically activated air input device, which can be switched from a deactivated state to an activated state, wherein it is closed in the deactivated state and, in the activated state, blows air at positive pressure into the hydraulic line (5).

21. Vehicle in which a cleaning system (1) according to one of Claims 1 to 20 is installed.

## Revendications

1. Système de nettoyage (1) à réglage électronique, destiné à être installé dans un véhicule pour nettoyer au moins un élément transparent (2) à l'aide d'un produit de nettoyage fluide, comprenant :
• au moins un récipient de produit de nettoyage (3) pour stocker le produit de nettoyage prêt à l'emploi,
• au moins un orifice de sortie (4) pour vaporiser le produit de nettoyage sur l'élément transparent (2),
• au moins une conduite hydraulique (5) qui relie le récipient de produit de nettoyage (3) à l'orifice de sortie (4),
• au moins une pompe principale (6) à commande électrique pour débiter le produit de nettoyage du récipient de produit de nettoyage (3) dans la conduite hydraulique (5)
• au moins un récipient d'additif (7) pour stocker un additif prévu pour être ajouté au produit de nettoyage,
• au moins un dispositif de dosage (8) à commutation électrique pour ajouter de façon contrôlée l'additif au produit de nettoyage,
• au moins une unité de commande électronique (9) qui commande de manière adaptative les composants à commande électrique du système de nettoyage (1),
• au moins un capteur de niveau de remplissage de produit de nettoyage (10) qui surveille le niveau de remplissage du produit de nettoyage dans le récipient de produit de nettoyage (3) et le transmet à l'unité de commande électronique (9),
• au moins un capteur de point de congélation (11) qui surveille le point de congélation dépendant du mélange du produit de nettoyage dans le récipient de produit de nettoyage (3) et le transmet à l'unité de commande électronique (9),
• au moins un capteur de température ambiante (12) qui surveille la température ambiante à l'extérieur du véhicule et la transmet à l'unité de commande électronique (9),
**caractérisé en ce que** dans la conduite hydraulique (5) entre la pompe principale (6) et l'orifice de sortie (4), au moins une pompe d'amplification de pression (16) à commande électrique est disposée qui amplifie une pression hydraulique générée par la pompe principale (6) dans la conduite hydraulique (5) en direction de l'orifice de sortie (4).

2. Système de nettoyage (1) selon la revendication 1, **caractérisé en ce qu'**un capteur de niveau de remplissage d'additif (13) est prévu qui surveille le niveau de remplissage de l'additif dans le récipient d'additif (7) et le transmet à l'unité de commande électronique (9).

3. Système de nettoyage (1) selon la revendication 1, **caractérisé en ce que** le récipient d'additif (7) est réalisé sous la forme d'une unité interchangeable ou d'une cartouche échangeable qui peut être raccordée au système de nettoyage (1) par l'intermédiaire d'une interface de couplage (14) et dont la recharge avec l'additif n'est pas prévue du tout ou du moins pas dans le véhicule.

4. Système de nettoyage (1) selon la revendication 1 ou 2, **caractérisé en ce que** le récipient de produit de nettoyage (3) et le récipient d'additif (7) sont réalisés de manière inséparable dans un boîtier de récipient commun (15).

5. Système de nettoyage (1) selon au moins l'une des revendications 1 à 4, **caractérisé en ce que** le dispositif de dosage (8) est réalisé sous la forme d'une soupape de commutation qui peut être commutée entre une position fermée et une position ouverte, et libère dans la position ouverte une liaison hydraulique entre le récipient d'additif (7) et le récipient de produit de nettoyage (3).

6. Système de nettoyage (1) selon au moins l'une des revendications 1 à 4, **caractérisé en ce que** le dispositif de dosage (8) est réalisé sous la forme d'une pompe volumétrique qui peut être mise en marche d'un état désactivé à un état activé, dans lequel elle ne peut pas être traversée à l'état désactivé et débite une quantité définie de fluide par unité de temps à l'état activé.

7. Système de nettoyage (1) selon au moins l'une des revendications précédentes, **caractérisé en ce que** dans la conduite hydraulique (5) entre la pompe principale (6) ou la pompe d'amplification de pression (16) d'une part et l'orifice de sortie (4) d'autre part, un dispositif de limitation de quantité (18) est disposé qui interrompt le débit à travers la conduite hydraulique (5) après le passage d'une quantité de fluide définie.

8. Système de nettoyage (1) selon la revendication 7, **caractérisé en ce que** le dispositif de limitation de quantité (18) est réalisé sous la forme d'une soupape à commutation électrique qui peut être commutée entre une position fermée et une position ouverte par le dispositif de commande électronique et bloque le débit à travers la conduite hydraulique (5) dans la position fermée.

9. Système de nettoyage (1) selon la revendication 7, **caractérisé en ce que** le dispositif de limitation de quantité (18) est réalisé sous la forme d'un dispositif de portionnement forcé qui bloque forcément la conduite hydraulique (5) après le passage d'une quantité de fluide prédéfinie par construction.

10. Système de nettoyage (1) selon au moins l'une des revendications précédentes, **caractérisé en ce qu'**au moins une unité d'identification de position (19) est prévue qui établit la position actuelle du véhicule et la transmet à l'unité de commande électronique (9).

11. Système de nettoyage (1) selon au moins l'une des revendications précédentes, **caractérisé en ce que** le véhicule dispose d'au moins un accès à internet mobile.

12. Système de nettoyage (1) selon au moins l'une des revendications précédentes, **caractérisé en ce que** l'additif contient un concentré d'antigel.

13. Système de nettoyage (1) selon au moins l'une des revendications précédentes, **caractérisé en ce que** l'additif contient un concentré de produit de nettoyage.

14. Système de nettoyage (1) selon au moins l'une des revendications précédentes, **caractérisé en ce qu'**au moins un élément transparent (2) est un composant d'un dispositif de détection (20) optique ou optoélectronique, le dispositif de détection (20) étant conçu pour une transmission de données bidirectionnelle avec l'unité de commande électronique (9).

15. Système de nettoyage (1) selon la revendication 14, **caractérisé en ce que** le dispositif de détection (20) est réalisé afin de pouvoir identifier un degré de saleté de l'élément transparent (2) et le transmettre à l'unité de commande électronique (9).

16. Système de nettoyage (1) selon la revendication 14 ou 15, **caractérisé en ce que** le dispositif de détection (20) est regroupé avec au moins un orifice de sortie (4) dans un module de consommateur (21).

17. Système de nettoyage (1) selon la revendication 14, **caractérisé en ce qu'**au moins quatre dispositifs de détection (20) sont installés sur le véhicule et sont conçus pour être nettoyés par le système de nettoyage (1).

18. Système de nettoyage (1) selon au moins l'une des revendications précédentes, **caractérisé en ce que** dans la conduite hydraulique (5) entre la pompe principale (6) et l'orifice de sortie (4), un dispositif d'évacuation (17) à commande électrique pour évacuer un produit de nettoyage contenu dans la conduite hydraulique est disposé, dans lequel le dispositif d'évacuation (17) est positionné en direction de l'orifice de sortie (4) substantiellement directement après la pompe principale (6) ou directement après la pompe d'amplification de pression (16).

19. Système de nettoyage (1) selon la revendication 18, **caractérisé en ce que** le dispositif d'évacuation (17) est réalisé sous la forme d'une soupape d'étranglement à commutation électrique qui peut être commutée entre une position fermée et une position ouverte et évacue le produit de nettoyage de la conduite hydraulique (5) dans la position ouverte.

20. Système de nettoyage (1) selon la revendication 18, **caractérisé en ce que** le dispositif d'évacuation (17) est réalisé sous la forme d'un dispositif d'injection d'air à pilotage électrique qui peut être transféré d'un état désactivé à un état activé, dans lequel il est fermé à l'état désactivé et injecte de l'air à surpression dans la conduite hydraulique (5) à l'état activé.

21. Véhicule dans lequel est installé un système de nettoyage (1) selon l'une quelconque des revendications 1 à 20.
